# EUROPÄISCHE PATENTSCHRIFT

(11) **EP 2 254 947 B1**
(45) Veröffentlichungstag und Bekanntmachung des Hinweises auf die Patenterteilung: **11.09.2013**
(21) Anmeldenummer: 09717661.4
(22) Anmeldetag: 04.03.2009
(51) Int. Cl.: C08F 297/02, C08F 297/04, C08L 53/00, C08L 53/02, C08L 25/16

(54) **ZÄHSTEIFE MISCHUNGEN AUS ALPHA-METHYLSTYROL-ACRYLNITRIL-COPOLYMEREN UND BLOCKCOPOLYMEREN**
TOUGH AND RIGID MIXTURES OF ALPHA-METHYLSTYRENE-ACRYLNITRILE COPOLYMERS AND BLOCK COPOLYMERS
MÉLANGES RIGIDES DE COPOLYMÈRES D'ALPHA-MÉTHYLSTYRÈNE-ACRYLONITRILE ET DE COPOLYMÈRES SÉQUENCÉS

(30) Priorität: 05.03.2008 EP 08152287
(43) Veröffentlichungstag der Anmeldung: 01.12.2010
(73) Patentinhaber: Styrolution GmbH, 60325 Frankfurt am Main (DE)
(72) Erfinder: KNOLL, Konrad, 68199 Mannheim (DE); KOCH, Jürgen, 67141 Neuhofen (DE); CHAROENSIRISOMBOON, Piyada, 68165 Mannheim (DE)
(74) Vertreter: Jacobi, Markus Alexander
(86) Internationale Anmeldenummer: PCT/EP2009/052536
(87) Internationale Veröffentlichungsnummer: WO 2009/109593

(56) Entgegenhaltungen:
- EP-A- 0 767 213
- WO-A-02/066556
- DE-A1- 4 240 445
- RIESS G ET AL: "New morphologies in rubber-modified polymers" JOURNAL OF MACROMOLECULAR SCIENCE PART B. PHYSICS, MARCEL DEKKER INC., NEW YORK, NY, US, Bd. B17, Nr. 2, 1. Januar 1980 (1980-01-01), Seiten 355-374, XP002096651 ISSN: 0022-2348

## Beschreibung

Die vorliegende Erfindung betrifft eine Zusammensetzung enthaltend mindestens ein Copolymer A aufgebaut aus mindestens einem alkylierten Styrol, Acrylnitril und gegebenenfalls mindestens einem weiteren Monomeren, mindestens ein Blockcopolymer B, das mindestens einen eine Hartphase bildenden Block aufgebaut aus mindestens einem vinylaromatischen Monomeren und mindestens einen eine Weichphase bildenden Block aufgebaut aus mindestens einem vinylaromatischen Monomeren und mindestens einem Dien aufweist und mindestens ein weiteres Copolymer C und gegebenenfalls ein Polymer D, wobei das Copolymer C mindestens ein Triblockcopolymer aufgebaut aus einem ersten Block aufgebaut aus mindestens einem vinylaromatischen Monomeren, einem zweiten Block aufgebaut aus mindestens einem Dien und einem dritten Block aufgebaut aus mindestens einem Methylmethacrylat-Monomeren oder enthaltend mindestens 50 Gew.-% Methylmethacrylat ist und das Polymer D mindestens ein Styrolpolymer ausgewählt aus glasklarem und schlagzähem Polystyrol ist. Des Weiteren betrifft die vorliegende Erfindung ein Verfahren zur Herstellung der erfindungsgemäßen Zusammensetzungen, die Verwendung der erfindungsgemäßen Zusammensetzungen zur Herstellung von Formteilen, Folien, Fasern oder Schäumen, Formteile, Folien, Fasern oder Schäume enthaltend die erfindungsgemäße Zusammensetzung sowie die Verwendung der erfindungsgemäßen Zusammensetzung als Verpackung für elektronische Komponenten wie integrierte Schaltkreise (Mikrochips) ("electronic packing"), für Anwendungen im Apparatebau, in Haushaltswaren, in Badezimmerartikeln, z.B. Zahnputzbecher, Behälter für Kosmetik etc., als Gehäuse, als Rohre, als Profile, für medizinische Artikel bzw. Geräte und in Spielzeug.

Thermoplastische Zusammensetzungen werden in verschiedensten Anwendungen eingesetzt. Je nach Anwendung sind dabei unterschiedliche Eigenschaften der thermoplastischen Zusammensetzungen wesentlich. Im Bereich des so genannten "electronic packing" bzw. "electronic packaging" werden Gehäuse für Elektronikkomponenten bereitgestellt. Entsprechende Gehäuse finden zum Beispiel in der Telekommunikation, Messtechnik oder Verkehrtechnik ihre Anwendung. Im Bereich des "electronic packaging" wird als thermoplastisches Kunststoffmaterial üblicherweise steifes PVC eingesetzt. PVC ist grundsätzlich gut geeignet, jedoch werden von vielen Firmen chlorfreie Lösungen angestrebt.

Aufgabe der vorliegenden Erfindung ist der Ersatz des steifen PVC im Bereich des "electronic packing" durch andere geeignete chlorfreie thermplastische Kunststoffzusammensetzungen auf Basis von α-Methylstyrol-Acrylnitril-Copolymeren (AMSAN).

AMSAN-Copolymere und thermoplastische Formmassen, die diese Copolymere enthalten, sind dem Fachmann bekannt.

So betrifft zum Beispiel EP-A 0 767 213 thermoplastische Formmassen aus einem Pfrofpolymerisat aus einem kautschukelastischen Pfropfkern und einer Pfropfschale aufgebaut aus einer Styrolverbindung und/oder einem Acrylsäure- oder Methacrylsäureester und einem oder mehreren weiteren Monomeren (Komponente A), einem thermoplastischen Polymerisat aus Styrol und/oder α-Methylstyrol und gegebenenfalls Acrylnitril sowie gegebenenfalls einem oder mehreren weiteren Monomeren (Komponente B), einem kautschukelastischen Blockcopolymerisat aus mindestens einem einpolymerisierte Einheiten eines vinylaromatischen Monomeren aufweisenden, eine Hartphase bildenden Blocks A und/oder eines Dienmonomere aufweisenden, eine erste kautschukelastische (Weich)Phase bildenden Blocks B und mindestens einem einpolymerisierte Einheiten sowohl eines vinylaromatischen Monomeren wie eines Diens aufweisenden elastomeren, eine Weichphase bildenden Block B/A (Komponente C) und gegebenenfalls einem Polymeren sternförmiger Struktur, das durch die Verknüpfung mehrerer Blockcopolymerketten aus Styrol und/oder α-Methylstyrol und Butadien und/oder Isopren über polyfunktionelle Moleküle erhalten wird. Die thermoplastischen Formmassen gemäß EP-A 0 767 213 können zum Beispiel für Kunststofffolien als Ersatz für PVC verwendet werden.

DE-A 44 20 952 betrifft kautschukelastische Blockcopolymerisate, die mindestens einen einpolymerisierte Einheiten eines vinylaromatischen Monomeren aufweisenden, eine Hartphase bildenden Block A und/oder einen Dienmonomere aufweisenden, eine erste kautschukelastische (Weich)Phase bildenden Block B und mindestens einen einpolymerisierte Einheiten sowohl eines vinylaromatische Monomeren wie eines Diens aufweisenden elastomeren, eine Weichphase bildenden Block B/A aufweisen, wobei dieses Blockcopolymerisat normalerweise transparent und rein thermoplastisch verarbeitbar ist. Die Blockcopolymerisate gemäß DE-A 44 20 952 eignen sich hervorragend zur Herstellung von kautschukelastischen Formteilen mit den üblichen Methoden der Thermoplastenverarbeitung, zum Beispiel als Folie, Schaum, Thermoformling, Spritzgussformling oder Profilextrudat.

Aus WO 00/58380 sind Blockcopolymere bekannt, enthaltend mindestens zwei Hartblöcke S₁ und S₂ aus vinylaromatischen Monomeren und mindestens einen dazwischenliegend, statistischen Weichblock B/S aus vinylaromatischen Monomeren und Dienen, wobei der Anteil der Hartblöcke über 40 Gew.-%, bezogen auf das gesamte Blockcopolymer beträgt. Die Blockcopolymere gemäß WO 00/58380 können mit weiteren Styrolpolymeren zu transparenten Polymermischungen verarbeitet werden. Die Blockcopolymere selbst oder die Polymermischungen gemäß WO 00/58380 können zur Herstellung von Fasern, Folien und Formkörpern mit einem ausgewogenen Zäh-/Steifigkeits-Verhältnis verwendet werden.

Ein Nachteil an Mischungen, die α-Methylstyrol-Acrylnitril-Copolymere (AMSAN) und Blockcopolymere aufgebaut aus einem eine Hartphase bildenden Block aufgebaut aus mindestens einem vinylaromatischen Monomeren und einem eine Weichphase bildenden Block aufgebaut aus mindestens einem vinylaromatischen Monomeren und mindestens einem Dien enthalten, ist, dass die Verträglichkeit des AMSAN und des Blockcopolymers unzureichend ist, so dass zum Beispiel in einem extrudierten Film oder einem geformten Formkörper eine Entmischung des AMSAN und des Blockcopolymers auftreten kann.

Aufgabe der vorliegenden Erfindung ist daher die Bereitstellung von Zusammensetzungen, die AMSAN-Copolymere sowie die vorstehend genannten Blockcopolymere enthalten, wobei eine Entmischung der genannten Komponenten vermindert bzw. vermieden wird.

Diese Aufgabe wird durch die Bereitstellung von Zusammensetzungen gelöst, enthaltend
A mindestens ein Copolymer A aufgebaut aus
   a1) mindestens einem alkylierten Styrol als Komponente A1;
   a2) Acrylnitril als Komponente A2;
   a3) gegebenenfalls mindestens einem weiteren Monomeren als Komponente A3;
B mindestens ein Blockcopolymer B aufgebaut aus
   b1) mindestens einem eine Hartphase bildenden Block B1, aufgebaut aus mindestens einem vinylaromatischen Monomeren, und
   b2) mindestens einem eine Weichphase bildenden Block B2, aufgebaut aus mindestens einem vinylaromatischen Monomeren und mindestens einem Dien;
C mindestens ein Triblockcopolymer C aufgebaut aus
   c1) einem ersten Block C1, aufgebaut aus mindestens einem vinylaromatischen Monomeren,
   c2) einem zweiten Block C2, aufgebaut aus mindestens einem Dien,
   c3) einem dritten Block C3, aufgebaut aus mindestens einem Methylmethacrylat-Monomeren oder enthaltend mindestens 50 Gew.-% Methylmethacrylat;
D gegebenenfalls mindestens ein Styrolpolymer ausgewählt aus glasklarem Polystyrol und schlagzähem Polystyrol.

Es wurde gefunden, dass sich das als Komponente C genannte Triblockcopolymer hervorragend als Verträglichkeitsvermittler zwischen dem Copolymer A und dem Blockcopolymer B eignet. Des Weiteren wird durch die Zugabe der Komponente C eine Steigerung der Zähigkeit der Zusammensetzungen aus einem Copolymer A und dem Blockcopolymer B erreicht. Die erfindungsgemäßen Zusammensetzungen zeichnen sich durch ein hervorragendes ausgewogenes Eigenschaftsprofil, insbesondere durch eine hohe Steifigkeit, Zähigkeit und Transparenz aus.

Im Allgemeinen genügen bereits geringe Mengen der Komponente C als Verträglichkeitsvermittler bzw. zur Steigerung der Zähigkeit in Zusammensetzungen, die die Komponenten A und B aufweisen. Die erfindungsgemäße Zusammensetzung enthält im Allgemeinen 0,1 bis 10 Gew.-%, bevorzugt 3 bis 10 Gew.-%, besonders bevorzugt 4 bis 6 Gew.-% der Komponente C, bezogen auf die Gesamtsumme der Komponenten A, B und C und gegebenenfalls D. Falls die Komponente D eingesetzt wird, werden im Allgemeinen 0,1 bis 10 Gew.-%, bevorzugt 3 bis 10 Gew.-% der Komponente D eingesetzt.

Üblicherweise enthält die erfindungsgemäße Zusammensetzung die Komponente A in einer Menge von 30 bis 85 Gew.-%, bevorzugt 45 bis 80 Gew.-%, besonders bevorzugt 55 bis 75 Gew.-%, bezogen auf die Gesamtsumme der Komponenten A, B und C und gegebenenfalls D.

Das Blockcopolymer B ist im Allgemeinen zu 5 bis 69,9 Gew.-%, bevorzugt 10 bis 52 Gew.-%, besonders bevorzugt 19 bis 41 Gew.-%, bezogen auf die Gesamtsumme der Komponenten A, B und C und gegebenenfalls D, in der erfindungsgemäßen Zusammensetzung vorhanden.

Somit betrifft die vorliegende Erfindung bevorzugt die erfindungsgemäßen Zusammensetzungen enthaltend
A 30 bis 85 Gew.-%, bevorzugt 45 bis 80 Gew.-%, besonders bevorzugt 55 bis 75 Gew.-% des Copolymers A;
B 5 bis 69,9 Gew.-%, bevorzugt 10 bis 52 Gew.-%, besonders bevorzugt 19 bis 41 Gew.-% des Blockcopolymers B; und
C 0,1 bis 45 Gew.-%, bevorzugt 3 bis 34,9 Gew.-%, besonders bevorzugt 4 bis 17 Gew.-% des Copolymers C;
D 0 bis 50 Gew.-%, bevorzugt 0,1 bis 45 Gew.-%, besonders bevorzugt 3 bis 40 Gew.-% der Komponente D,
wobei die Gesamtsumme der Komponenten A, B, C und gegebenenfalls D 100 Gew.-% beträgt.

In einer bevorzugten Ausführungsform enthalten die erfindungsgemäßen Zusammensetzungen
A 55 bis 75 Gew.-% des Copolymers A;
B 19 bis 41 Gew.-% des Blockcopolymers B; und
C 4 bis 6 Gew.-% des Copolymers C,
wobei die Gesamtsumme der Komponenten A, B und C 100 Gew.-% beträgt.

In einer weiteren bevorzugten Ausführungsform enthalten die erfindungsgemäßen Zusammensetzungen
A 30 bis 60 Gew.-% des Copolymers A;
B 5 bis 35 Gew.-% des Blockcopolymers B; und
C 5 bis 15 Gew.-% des Copolymers C, und
D 10 bis 40 Gew.-% des Copolymers D,
wobei die Gesamtsumme der Komponenten A, B, C und gegebenenfalls D 100 Gew.-% beträgt.

### Komponente A

Bei der Komponente A handelt es sich um mindestens ein Copolymer A aufgebaut aus
a1) mindestens einem alkylierten Styrol als Komponente A1;
a2) Acrylnitril als Komponente A2; und
a3) gegebenenfalls mindestens einem weiteren Monomeren als Komponente A3.

Bevorzugt ist das Copolymer A in der erfindungsgemäßen Zusammensetzung aufgebaut aus
a1) 60 bis 90 Gew.-%, bevorzugt 65 bis 80 Gew.-% mindestens eines alkylierten Styrols als Komponente A1,
a2) 10 bis 40 Gew.-%, bevorzugt 20 bis 35 Gew.-% Acrylnitril als Komponente A2,
a3) 0 bis 30 Gew.-% mindestens eines weiteren Monomeren als Komponente A3,
wobei die Gesamtsumme der Komponenten A1, A2 und A3 100 Gew.-% beträgt.

Als Komponente A1 wird mindestens ein alkyliertes Styrol eingesetzt. Geeignete alkylierte Styrole weisen die allgemeine Formel (I) auf 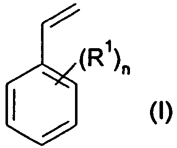 worin bedeuten
- R¹: unabhängig voneinander C₁- bis C₈-Alkyl, bevorzugt C₁- bis C₆-Alkyl, besonders bevorzugt C₁- bis C₄-Alkyl wie Methyl, Ethyl, n-Propyl, iso-Propyl, n-Butyl, sec.-Butyl, iso-Butyl, tert.-Butyl;
- n: 1, 2, oder 3, bevorzugt 1 oder 2;
wobei der Rest R¹ bei n = 1 bzw. die Reste R¹ bei n = 2 oder 3 in ortho-, meta- oder para-Position zu dem Vinylrest des Styrols angeordnet sein können.

Bevorzugte als Komponente A1 geeignete alkylierte Styrole sind ausgewählt aus der Gruppe bestehend aus α-Methylstyrol (o-Methylstyrol), α,p-Dimethylstyrol (2,4-Dimethylstyrol), α-Ethylstyrol (o-Ethylstyrol), α-n-Propylstyrol (o-n-Propylstyrol), α-Isopropylstyrol (o-Isopropylstyrol), p-Methylstyrol, p-Ethylstyrol, p-n-Propylstyrol, p-Isopropylstyrol, p-Butylstyrol, p-tert-Butylstyrol, m-Methylstyrol, m-Ethylstyrol, m-Isopropylstyrol, m-Butylstyrol, 2,5-Dimethylstyrol und 3,5-Dimethylstyrol. Besonders bevorzugt sind α-Methylstyrol (o-Methylstyrol) und α,p-Dimethylstyrol (2,4-Dimethylstyrol), ganz besonders bevorzugt ist α-Methylstyrol (o-Methylstyrol).

Als weitere Monomere A3 neben dem mindestens einem alkylierten Styrol als Komponente A1 und Acrylnitril als Komponente A2 sind zum Beispiel weitere von der Komponente A1 verschiedene vinylaromatische Monomere wie Styrol und Styrolderivate, Methacrylnitril, Acrylsäure, Methacrylsäure, Dicarbonsäuren wie Maleinsäure und Fumarsäure sowie deren Anhydride wie Maleinsäureanhydrid, Stickstoff-funktionelle Monomere wie Dimethylaminoethylacrylat, Diethylaminoethylacrylat, Vinylimidazol, Vinylpyrrolidon, Vinylcaprolactam, Vinylcarbazol, Vinylanilin, Acrylamid, C₁-C₄-Alkylester der Methacrylsäure wie Methylmethacrylat, Ethylmethacrylat, n-Propylmethacrylat, isoPropylmethacrylat, n-Butylmethacrylat, iso-Butylmethacrylat, sek-Butylmethacrylat, tert-Butylmethacrylat sowie Hydroxyethylacrylat, aromatische und araliphatische Ester der Acrylsäure und Methacrylsäure wie Phenylacrylat, Phenylmethacrylat, Benzylacrylat, Benzylmethacrylat, 2-Phenylethylacrylat, 2-Phenylethylmethacrylat, 2-Phenoxyethylacrylat und 2-Phenoxy-Ethylmethacrylat, ungesättigte Ether wie Vinylmethylether sowie Mischungen der genannten Monomere geeignet.

In einer bevorzugten Ausführungsform ist das Copolymer A ausschließlich aus α-Methylstyrol als Komponente A1 und Acrylnitril als Komponente A2 aufgebaut.

Bevorzugt handelt es sich bei dem Copolymer A um ein alternierendes α-Methylstyrol-Acrylnitril-Copolymer, das die Komponenten A1 und A2 in den vorstehend genannten Mengen aufweist.

Das Molekulargewicht (Gewichtsmittelwert M_{w}), gemessen durch Lichtstreuung, liegt im Allgemeinen zwischen 50.000 und 500.000 g/mol, bevorzugt zwischen 60.000 und 150.000 g/mol.

Das Copolymer A zeichnet sich in einer bevorzugten Ausführungsform dadurch aus, dass es transparent ist.

Die Copolymere A sind dem Fachmann bekannt und können gemäß dem Fachmann bekannten Verfahren erhalten werden. Üblicherweise werden sie durch Copolymerisation der entsprechenden vorstehend genannten Monomere, zum Beispiel durch Substanz, Lösungs-, Suspensions-, Fällungs- oder Emulsionspolymerisation erhalten. Einzelheiten dieser Verfahren sind zum Beispiel im Kunststoffhandbuch, Hrsg. R. Vieweg und G. Daumiller, Bd. V "Polystyrol", Carl-Hanser-Verlag München 1969, Seite 118ff beschrieben.

### Komponente B

Als Komponente B wird erfindungsgemäß ein Blockcopolymer B aufgebaut aus
b1) mindestens einem eine Hartphase bildenden Block B1, aufgebaut aus mindestens einem vinylaromatischen Monomeren, und
b2) mindestens einem eine Weichphase bildenden Block B2, aufgebaut aus mindestens einem vinylaromatischen Monomeren und mindestens einem Dien eingesetzt.

Das Blockcopolymer B weist bevorzugt eine Monomerzusammensetzung von 15 bis 65 Gew.-%, bevorzugt 15 bis 50 Gew.-% Dien und 35 bis 85 Gew.-%, bevorzugt 50 bis 85 Gew.-% vinylaromatischem Monomer auf, wobei die Gesamtsumme an Dien und vinylaromatischem Monomer 100 Gew.-% beträgt.

Das Blockcopolymer B kann als lineares oder stemförmiges Blockcopolymer vorliegen. Es ist ebenfalls möglich, dass die Komponente B zwei oder mehr verschiedene Blockcopolymere B aufweist.

Bevorzugt ist das Blockcopolymer B aus mindestens zwei eine Hartphase bildenden Blöcken B1 und mindestens einem dazwischen liegenden eine Weichphase bildenden Block B2 aufgebaut, wobei die vinylaromatischen Monomere und die Diene in dem Block B2 bevorzugt statistisch verteilt sind. Die Menge der Hartphasen beträgt im Allgemeinen mehr als 30 Gew.-%, bevorzugt mehr als 40 Gew.-%, bezogen auf das Gesamtgewicht des Blockcopolymers B. Die Menge der Weichphase beträgt entsprechend weniger als 70 Gew.-%, bevorzugt weniger als 60 Gew-%, bezogen auf das Gesamtgewicht des Blockcopolymers B.

Bevorzugt ist der relative Anteil an 1,2-Verknüpfungen der Dieneinheiten des die Weichphase bildenden Blocks B2 (Polydien), bezogen auf die Summe an 1,2- und 1,4-cis/trans-Verknüpfungen ≤ 20%, bevorzugt 10 bis 20%, besonders bevorzugt 12 bis 16%.

Bevorzugt geeignete in dem Block B1 und dem Block B2 einsetzbare vinylaromatische Monomere sind Monomere wie Styrol und Styrolderivate der Formel II 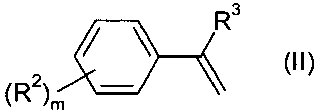 worin R² und R³ unabhängig voneinander für Wasserstoff oder C₁- bis C₈-Alkyl stehen, und m 1, 2 oder 3, bevorzugt 1 oder 2, besonders bevorzugt 1 bedeutet, sowie Mischungen dieser Verbindungen,
wobei Styrol, α-Methylstyrol, p-Methylstyrol, α-Ethylstyrol, p-Ethylstyrol, p-tert.-Butylstyrol und α-tert.-Butylstyrol bevorzugt sind und Styrol ganz besonders bevorzugt ist.

Bevorzugt geeignete in dem Block B2 einsetzbare Diene sind 1,3-Butadien, Isopren, 2,3-Dimethylbutadien, 1,3-Pentadien, 1,3-Hexadiene, 1-Phenylbutadien, Piperylen oder Mischungen dieser Verbindungen. Bevorzugt wird 1,3-Butadien als Dien eingesetzt.

Besonders bevorzugt ist der Block B1 in dem Blockcopolymer B aufgebaut aus Styrol und der Block B2 aufgebaut aus Butadien und Styrol. Der Butadien-Anteil beträgt in dem besonders bevorzugten Blockcopolymer B 15 bis 50 Gew.-%, bezogen auf das Gesamtgewicht des Blockcopolymers B. Der Anteil an Styrol in dem Blockcopolymer B beträgt entsprechend besonders bevorzugt 50 bis 85 Gew.-%, bezogen auf das Gesamtgewicht des Blockcopolymers B.

Besonders bevorzugt ist das Blockcopolymer B ausschließlich aus die Hartphase bildenden Blöcken B1 und mindestens einem die Weichphase bildenden Block B2 aufgebaut und enthält keine Homopolydienblöcke. Bevorzugte Blockcopolymere B weisen äußere die Hartphase bildende Blöcke B1 auf, die jeweils unterschiedliche Blocklängen aufweisen. Das gewichtsmittlere Molekulargewicht des ersten Blocks B1¹ beträgt bevorzugt 5000 bis 30000 g/mol, besonders bevorzugt 10000 bis 20000 g/mol. Das gewichtsmittlere Molekulargewicht des zweiten Blocks B1² beträgt bevorzugt mehr als 35000 g/mol, besonders bevorzugt 50000 bis 150000 g/mol. Das gewichtsmittlere Molekulargewicht wurde mittels GPC durch Probenahme während der Polymerisation oder durch OsO₄-Abbau gefolgt von GPC ermittelt. Die genannten Verfahren zur Ermittlung des Molekulargewichts sind dem Fachmann bekannt.

Die vorstehend und im Folgenden genannten Molekulargewichte wurden mittels Gelpermeationschromatographie (GPC) an Polystyrol-Gel-Säulen vom Typ Mixed B der Fa. Polymer Labs mit monodispersen Polystyrolstandards bei Raumtemperatur und Tetrahydrofuran als Eluens bestimmt. Die absoluten Molmassen der Copolymere können mit Hilfe der universellen Kalibrierung mittels der Kuhn-Mark-Houwink-Gleichung ermittelt werden. Die dazu erforderlichen Mark-Houwink Koeffizienten a und K für das zu untersuchende Polymer/Lösungsmittelgemisch und das Standard-Polymer/Lösungsmittelgemisch sind dem Fachmann bekannt.

Zwischen den äußeren die Hartphase bildenden Blöcken B1¹ und B1² können einer oder mehrere, bevorzugt mehrere die Weichphase bildende Blöcke B2 vorliegen. Bevorzugt liegen mindestens zwei unterschiedliche Blöcke B2, B2¹ und B2², vor, die unterschiedliche Gehalte an vinylaromatischen Monomeren und somit unterschiedliche Glasübergangstemperaturen, T_{g}, aufweisen.

Wie vorstehend erwähnt, können die Blockcopolymere B eine lineare oder eine sternförmige Struktur aufweisen. Als lineare Struktur ist die Struktur: B1¹-B2¹-B2²-B1² bevorzugt. Das molare Verhältnis von vinylaromatischem Monomer zu Dien in den Blöcken B2 ist bevorzugt kleiner 0,25 in dem Block B2¹ und bevorzugt 0,5 bis 2 in dem Block B2².

Bevorzugte sternförmige Blockcopolymere B weisen eine Struktur auf, mit mindestens einer sternförmigen Verzweigung der Blocksequenz B1¹-B² und mindestens einer sternförmigen Verzweigung der Blocksequenz B1²-B2, oder eine Struktur mit mindestens einer sternförmigen Verzweigung der Blocksequenz B1¹-B2-B1³ und mindestens einer sternförmigen Verzweigung der Blocksequenz B1²-B2-B1³. Dabei stellt B1³ einen weiteren eine Hartphase bildenden Block B1 aufgebaut aus vinylaromatischen Monomeren dar.

Besonders bevorzugte sternförmige Blockcopolymere B weisen eine Struktur auf, mit mindestens einer sternförmigen Verzweigung der Blocksequenz B1¹-B2¹-B2² und mindestens einer sternförmigen Verzweigung der Blocksequenz B1²-B2¹-B2² oder mit mindestens einer sternförmigen Verzweigung der Blocksequenz B1¹-B2¹-B2²-B1³ und mindestens einer sternförmigen Verzweigung der Blocksequenz B1²-B2¹-B2²-B1³. Das molare Verhältnis von vinylaromatischem Monomer zu Dien in den die Weichphase bildenden Blöcken B2 ist bevorzugt 0,5 bis 2 in dem äußeren Block B2¹ und bevorzugt weniger als 0,5 in dem inneren Block B2². Der höhere Gehalt an vinylaromatischem Monomer in dem äußeren Block B2¹ macht das Blockcopolymer zäher bei unverändertem Gesamtdiengehalt.

Sternförmige Blockcopolymere B mit einem weiteren inneren Block B1³ haben eine höhere Steifigkeit verbunden mit einer vergleichbaren Zähigkeit. Der Block B1³ dient somit als Füllmaterial in der Weichphase ohne das Verhältnis von Hartphase zu Weichphase zu ändern. Des gewichtsmittlere Molekulargewicht des Blocks B1³ ist im Allgemeinen wesentlich geringer als das der Blöcke B1¹ und B1². Das gewichtsmittlere Molekulargewicht (ermittelt mittels GPC) des Blocks B1³ beträgt bevorzugt 500 bis 5000 g/mol.

In einer besonders bevorzugten Ausführungsform wird als Blockcopolymer B ein lineares oder stemförmiges Blockcopolymer B eingesetzt, das externe Polystyrolblöcke B1 und dazwischen Styrol/Butadien-Copolymerblöcke B2 mit einer statistischen Verteilung von Styrol und Butadien aufweist, und
15 bis 50 Gew.-%, basierend auf dem Gesamtgewicht des Blockcopolymers B, Butadien, und
50 bis 85 Gew.-%, basierend auf dem Gesamtgewicht des Blockcopolymers B, Styrol
aufweist.

Die Blockcopolymere können nach allen dem Fachmann bekannten Verfahren hergestellt werden. Ein geeignetes Verfahren ist z.B. in WO 97/40079 und der darin genannten Literatur erwähnt. Beispielsweise können die Blockcopolymere B durch sequentielle anionische Polymerisation hergestellt werden, wobei zumindest die Polymerisation des die Weichphase bildenden Blocks B2 in Anwesenheit eines Randomizers erfolgt. Die Anwesenheit des Randomizers führt zu einer statistischen Verteilung des Diens und der vinylaromatischen Einheiten in dem die Weichphase bildenden Block B2. Geeignete Randomizer sind Donorlösungsmittel wie Ether, z.B. Tetrahydrofuran, tertiäre Amine oder (in dem eingesetzten Lösungsmittel) lösliche Kaliumsalze. Bei Einsatz von Tetrahydrofuran werden, um eine ideale statistische Verteilung zu erzielen, im Allgemeinen mehr als 0,25 Vol.-% Tetrahydrofuran, basierend auf dem eingesetzten Lösungsmittel, eingesetzt. Bei geringeren Konzentrationen werden Blöcke erhalten, die einen Zusammensetzungsgradienten aufweisen (d.h. eine sich mehr oder weniger gleitend ändernde Zusammensetzung der Monomereinheiten aufweisende Blöcke).

Im Falle relativ großer Mengen an Tetrahydrofuran erhöht sich der relative Anteil an 1,2-Verknüpfungen der Dieneinheiten gleichzeitig auf etwa 30 bis 35%.

Auf der anderen Seite wird bei Einsatz von Kaliumsalzen als Randomizer der relative Anteil an 1,2-Verknüpfungen der Dieneinheiten in der Weichphase nur unwesentlich erhöht. Die erhaltenen Blockcopolymere B sind daher zur Vemetzung weniger geeignet und haben, bei gleichem Butadiengehalt, niedrigere Glasübergangstemperaturen T_{g}.

Das Kaliumsalz wird im Allgemeinen in einer geringeren Menge als der molaren Menge, bezogen auf den anionischen Polymerisationsinitiator, eingesetzt. Bevorzugt beträgt das molare Verhältnis von anionischem Polymerisationsinitiator zu Kaliumsalz 10:1 bis 100:1, besonders bevorzugt 30:1 bis 70:1. Das eingesetzte Kaliumsalz ist im Allgemeinen in dem Reaktionsmedium (Lösungsmittel) löslich. Geeignete Kaliumsalze sind z.B. Kaliumalkoholate, bevorzugt Kaliumalkoholate von tertiären Alkoholen mit mindetsens 5 Kohlenstoffatomen. Besonders bevorzugte Kaliumsalze sind Kalium-2,2-dimethyl-1-propanolat, Kalium-2-methylbutanolat (Kalium-tert.-amylat), Kalium-2,3-Dimethyl-3-pentanolat, Kalium-2-methylhexanolat, Kalium-3,7-dimethyl-3-octanolat (Kaliumtetrahydrolinaloolat) und Kalium-3-ethyl-3-pentanolat. Die Kaliumalkoholate sind z.B. durch Reaktion von elementarem Kalium, Kalium/Natrium-Legierung oder Kaliumalkylaten und den entsprechenden Alkoholen in einem inerten Lösungsmittel erhältlich.

Zweckdienlicherweise wird das Kaliumsalz nur nach Zugabe des anionischen Polymerisationsinitiators zu der Reaktionsmischung gegeben. Auf diese Weise kann die Hydrolyse des Kaliumsalzes durch Spuren von protischen Verunreinigungen vermieden werden. Bevorzugt wird das Kaliumsalz kurz vor der Polymerisation des statistischen die Weichphase bildenden Blocks B2 zugegeben.

Als anionische Polymerisationsinitiatoren I sind alle dem Fachmann bekannten anionischen Polymerisationsinitiatoren geeignet. Im Allgemeinen werden übliche mono-, bi- und polyfunktionelle Alkalimetallalkyle, -aryle oder -aralkyle als anionische Polymerisationsinitiatoren eingesetzt. Bevorzugt werden Organolithiumverbindungen wie Ethyl-, Propyl-, Isopropyl-, n-Butyl-, sek.-Butyl-, tert.-Butyl-, Phenyl-, Diphenylhexyl-, Hexamethyldi-, Isoprenyl- oder Polystyryllithium, 1,4-Dilithiobutan, 1,4-Dilithio-2-buten oder 1,4-Dilithiobenzol eingesetzt. Geeignete Mengen des polymerisationsinitiators sind abhängig von dem gewünschten Molekulargewicht. Im Allgemeinen werden 0,001 bis 5 mol%, basierend auf der Gesamtmenge der eingesetzten Monomere, eingesetzt.

Bei der Herstellung von asymmetrischen sternförmigen Blockcopolymeren B wird mindestens zweimal ein Polymerisationsinitiator zugegeben. Bevorzugt werden ein erstes vinylaromatisches Monomer B1a und ein Initiator I1 gleichzeitig in den Reaktor gegeben und vollständig polymerisiert, gefolgt, wiederum gleichzeitig, von der Zugabe des vinylaromatischen Monomers B1b und dem Initiator I2. Auf diese Weise werden nebeneinander zwei lebende Polymerketten, B1a-I1 und B1b-I2, erhalten, an die anschließend der Block B2¹ durch gemeinsame Zugabe des vinylaromatischen Monomers und des Diens polymerisiert wird, und durch weitere gemeinsame Zugabe von vinylaromatischem Monomer und Dien ggf. der Block B2² polymerisiert wird, sowie des Weiteren gegebenenfalls der Block B1³ durch weitere Zugabe eines vinylaromatischen Monomers B1c polymerisiert wird. Das Verhältnis von Initiator I1 zu I2 bestimmt den relativen Anteil der sternförmigen Verzweigungen, die statistisch verteilt in dem erhaltenen individuellen stemförmigen Blockcopolymer vorliegen. In dem vorliegenden Beispielfall wird der Block B1¹ durch Zugabe der vinylaromatischen Monomere B1a und B1b gebildet und die Blöcke B1² und B1³ werden durch Zugabe der vinylaromatischen Monomere B1 b und B1 c allein gebildet. Das molare Initiatorverhältnis I2/I1 beträgt bevorzugt 4/1 bis 1/1, besonders bevorzugt 3,5/1 bis 1,5/1.

Die Polymerisation kann in Anwesenheit eines Lösungsmittels durchgeführt werden. Geeignete Lösungsmittel sind aliphatische, cycloaliphatische oder aromatische Kohlenwasserstoffe mit 4 bis 12 Kohlenstoffatomen, die üblicherweise in der anionischen Polymerisation eingesetzt werden, wie Pentan, Hexan, Heptan, Cyclohexan, Methylcyclohexan, Isooctan, Benzol, Alkylbenzole wie Toluol, Xylol, Ethylbenzol oder Decalin oder geeignete Mischungen der genannten Lösungsmittel. Bevorzugt werden Cyclohexan oder Methylcyclohexan eingesetzt.

Falls Metallorganyle in der Polymerisation eingesetzt werden, wie Magnesium-, Aluminium- oder Zinkalkyle, die einen verlangsamenden Effekt auf die Polymerisationsgeschwindigkeit haben, kann die Polymerisation auch in Abwesenheit eines Lösungsmittels durchgeführt werden.

Nach dem Ende der Polymerisation kann die lebende Polymerkette durch ein Kettenabbruchmittel blockiert werden. Geeignete Kettenabbruchmittel sind protische Verbindungen oder Lewis Säuren, z.B. Wasser, Alkohole, aliphatische oder aromatische Carbonsäuren und anorganische Säuren wie Kohlensäure oder Borsäure.

Anstelle der Zugabe eines Kettenabbruchmittels nach Beendigung der Polymerisation können die lebenden Polymerketten auch in einer sternförmigen Art durch polyfunktionelle Kupplungsmittel wie polyfunktionelle Aldehyde, Ketone, Ester, Anydride oder Epoxide verknüpft werden. Auf diese Weise können symmetrische und unsymmetrische sternförmige Blockcopolymere, deren Verzweigungen die vorstehend genannten Strukturen aufweisen, erhalten werden, durch Kupplung identischer oder verschiedener Blöcke. Beispielsweise können asymmetrische sternförmige Blockcopolymere durch separate Herstellung der individuellen sternförmigen Verzweigungen oder durch mehrfache Initiierung, z.B. zweifache Initiierung mit Initiatoranteilen in den folgenden Verhältnissen: 2/1 bis 10/1, erhalten werden.

### Komponente C

Die Komponente C in den erfindungsgemäßen Zusammensetzungen ist mindestens ein weiteres Terpolymer C aufgebaut aus
c1) einem ersten Block C1, aufgebaut aus mindestens einem vinylaromatischen Monomeren,
c2) einem zweiten Block C2, aufgebaut aus mindestens einem Dien,
c3) einem dritten Block C3, aufgebaut aus mindestens einem Methylmethacrylat-Monomeren oder enthaltend mindestens 50 Gew.-% Methylmethacrylat.

### Komponente C

Bevorzugt ist das Triblockpolymer C aufgebaut aus:
c1) 10 bis 88 Gew.-%, bevorzugt 15 bis 80 Gew.-%, besonders bevorzugt 15 bis 55 Gew.-% des ersten Blocks C1,
c2) 2 bis 80 Gew.-%, bevorzugt 5 bis 70 Gew.-%, besonders bevorzugt 10 bis 45 Gew.-% des zweiten Blocks C2,
c3) 10 bis 88 Gew.-%, bevorzugt 15 bis 80 Gew.-%, besonders bevorzugt 35 bis 75 Gew.-% des dritten Blocks C3,
wobei die Summe der Komponenten C1, C2 und C3 100 Gew.-% beträgt.

In einer besonders bevorzugten Ausführungsform ist das Triblockcopolymer aufgebaut aus:
c1) 35 bis 55 Gew.-% des ersten Blocks C1,
c2) 10 bis 15 Gew.-% des zweiten Blocks C2,
c3) 35 bis 50 Gew.-% des dritten Blocks C3,
wobei die Summe der Komponenten C1, C2 und C3 100 Gew.-% beträgt

Geeignete vinylaromatische Monomere zur Herstellung des Blocks C1 sind die vorstehend bezüglich der Komponente B genannten vinylaromatischen Monomere. Bevorzugt wird Styrol oder α-Methylstyrol als vinylaromatisches Monomer eingesetzt. Die Glasübergangstemperatur T_{g} des aus vinylaromatischen Monomeren aufgebauten Blocks C1 beträgt im Allgemeinen mehr als 23°C, bevorzugt mehr als 50°C.

Geeignete Diene zur Herstellung des Blocks C2 sind die vorstehend bezüglich der Komponente B2 genannten Diene. Bevorzugt wird Butadien oder Isopren als Dien eingesetzt. Als Block C2 geeignete Polybutadiene sind bevorzugt diejenigen mit der niedrigsten Glasübergangstemperatur T_{g}, d.h. einer T_{g} von unter 0°C, bevorzugt unter -40°C. Z.B. weist 1,4-Polybutadien eine T_{g} von ungefähr -90°C auf und 1,2-Polybutadien eine T_{g} von ungefähr 0°C. Die Blöcke C2 können auch hydriert sein, wobei die Hydrierung nach dem Fachmann bekannten Verfahren erfolgt.

Der Block C3 ist aus mindestens einem Methylmethacrylat-Monomeren aufgebaut oder enthält mindestens 50 Gew.-%, bevorzugt mindestens 75 Gew.-% Methylmethacrylat. Geeignete Comonomere, die gegebenenfalls eingesetzt werden können, sind dem Fachmann bekannt. Z.B. kann tert.-Butylmethacrylat als Comonomer eingesetzt werden.

Demgemäß ist ein Triblockcopolymer C bevorzugt, das aus einem ersten Block C1 aus mindestens einem vinylaromatischen Monomeren ausgewählt aus Styrol und α-Methylstyrol, einem zweiten Block C2 aus mindestens einem Dien ausgewählt aus Butadien und Isopren und einem dritten Block C3, der zu mindestens 60 Gew.-% aus PMMA aufgebaut ist, aufgebaut ist

Das Triblockcopolymer weist im Allgemeinen ein zahlenmittleres Molekulargewicht von 10000 g/mol bis 500000 g/mol, bevorzugt von 40000 g/mol bis 300000 g/mol auf, ermittelt mittels GPC.

Das Triblockcopolymer C kann durch anionische Polymerisation nach dem Fachmann bekannten Verfahren hergestellt werden. Geeignete Verfahren sind z.B. in EP-A 0 524 054, EP-A 0 749 987 und EP-A 1 290 088 offenbart.

### Komponente D

Bei der Komponente D, die gegebenenfalls zusätzlich zu den Komponenten A, B und C in den erfindungsgemäßen Zusammensetzungen vorliegen kann, handelt es sich um mindestens ein Styrolpolymer ausgewählt aus glasklarem Polystyrol und schlagzähem Polystyrol.

Geeignete glasklare sowie schlagzähe Polystyrole, deren Herstellung, Struktur und Eigenschaften sind z.B. in der Übersichtsliteratur A. Echte, F. Haaf, J. Hambrecht in Angew. Chem. (int. Ed. Engl.) 20, 344 bis 361 und in Kunststoffhandbuch, Band 4, Polystyrol, Carl Hanser Verlag (1996) beschrieben. Die Herstellung der Polystyrole erfolgt im Allgemeinen mittels anionischer oder radikalischer Polymerisation. Bevorzugt wird Polystyrol eingesetzt, deren toluollöslicher Anteil ein gewichtsmittleres Molekulargewicht M_{w} von 50000 bis 500000 g/mol aufweist. Besonders bevorzugt wird als Komponente D glasklares Polystyrol eingesetzt.

### Komponente E

Zusätzlich zu den Komponenten A, B, C und gegebenenfalls D können die erfindungsgemäßen Zusammensetzungen weitere Komponenten enthalten, z.B. weitere (Co)Polymere, als Komponente E.

Diese können in den erfindungsgemäßen Zusammensetzungen - wenn Sie vorliegen - in Mengen von 1 bis 20 Gew.-%, bevorzugt 3 bis 15 Gew.-%, besonders bevorzugt 3 bis 15 Gew.-%, bezogen auf die Gesamtmasse der erfindungsgemäßen Zusammensetzungen mit den Komponenten A, B, C und gegebenenfalls D und zusätzlich E, vorliegen.

Bei der Komponente E kann es sich um alle dem Fachmann bekannten und geeigneten Homo- oder Copolymere handeln. Bevorzugt werden als Komponente E kautschukartige Styrol-Blockcopolymere eingesetzt, z.B. ausgewählt aus der Gruppe bestehend aus Styrol-Butadien-Styrol-Blockcopolymeren, Styrol-Isopren-Styrol-Blockcopolymeren, Styrol-Ethylen/Butylen-Styrol-Blockcopolymeren, Styrol-Ethylen/Propylen-Styrol-Blockcopolymeren. Der Anteil der Styrolkomponente beträgt in den vorstehend genannten Blockcopolymeren im Allgemeinen 10 bis 40 Gew.-% und der Anteil der Kautschukkomponente (Butadien-, Isopren-, Ethylen/Butylen-, Ethylen/Propylen-Komponente) beträgt im Allgemeinen 60 bis 90 Gew.-%.

Geeignete Blockcopolymere und deren Herstellungsverfahren sind dem Fachmann bekannt und kommerziell unter dem Handelsnamen Kraton® (von Kraton Polymers LLC) erhältlich.

### Weitere Komponenten

Neben den Komponenten A, B und C, gegebenenfalls D und gegebenenfalls E können die erfindungsgemäßen Zusammensetzungen noch Zusatzstoffe enthalten, z.B. Gleit- und Entformungsmittel, Pigmente, Farbstoffe, Flammschutzmittel, Antioxidantien, Stabilisatoren gegen Lichteinwirkung, faser- und pulverförmige Füll- und Verstärkungsmittel und Antistatika in den für diese Substanzen üblichen und dem Fachmann bekannten Mengen.

### Herstellung der erfindungsgemäßen Zusammensetzungen

Die Herstellung der erfindungsgemäßen Zusammensetzungen erfolgt im Allgemeinen durch Mischen der Komponenten A, B, C, gegebenenfalls D und gegebenenfalls E und gegebenenfalls weiterer Zusatzstoffe. Das Mischen kann dabei nach dem Fachmann bekannten Mischverfahren erfolgen, z.B. unter Aufschmelzen in einem Extruder, Banbury-Mischer, Kneter, Walzenstuhl oder Kalander, bevorzugt bei 160 bis 400 °C, besonders bevorzugt 180 bis 280°C. Die Komponenten können jedoch auch ohne Aufschmelzen "kalt" vermischt werden und das pulvrige oder aus Granulaten aufgebaute Gemisch wird erst bei der weiteren Verarbeitung aufgeschmolzen und homogenisiert.

### Formteile, Folien, Fasern und Schäume

Die erfindungsgemäßen Zusammensetzungen können zur Herstellung von Formteilen, Folien, Fasern und Schäumen verwendet werden. Geeignete Verfahren zur Herstellung der Formteile, Folien, Fasern und Schäume, z.B. Thermoformen, Extrusion, Spritzguss, Kalandrieren, Blasformen, Formpressen und Sintern, sind dem Fachmann bekannt.

Ein weiterer Gegenstand der vorliegenden Erfindung sind Formteile, Folien, Fasern und Schäume enthaltend eine erfindungsgemäße Zusammensetzung.

Die erfindungsgemäßen Zusammensetzungen sind z.B. als Verpackung für elektronische Komponenten wie integrierte Schaltkreise (Mikrochips) ("electronic packing"), für Anwendungen im Apparatebau, in Haushaltswaren, in Badezimmerartikeln, z.B. Zahnputzbecher, Behälter für Kosmetik etc., als Gehäuse, als Rohre, als Profile, für medizinische Artikel bzw. Geräte und in Spielzeug geeignet. Ein Weiterer Gegenstand der vorliegenden Erfindung ist daher die Verwendung der erfindungsgemäßen Zusammensetzungen als Verpackung für elektronische Komponenten wie integrierte Schaltkreise (Mikrochips) ("electronic packing"), für Anwendungen im Apparatebau, in Haushaltswaren, in Badezimmerartikeln, z.B. Zahnputzbecher, Behälter für Kosmetik etc., als Gehäuse, als Rohre, als Profile, für medizinische Artikel bzw. Geräte und in Spielzeug.

Die nachfolgenden Beispiele erläutem die Erfindung zusätzlich.

### Beispiele

Die Herstellung der in den Tabellen 1a und 2a genannten Zusammensetzungen erfolgt durch Aufschmelzen der in den Tabellen 1a und 2a angegebenen Komponenten (in den genannten Gewichtsteilen) in einem Zweiwellenextruder bei 230°C. Die erhaltene Polymermischung wird ausgetragen, abgekühlt und granuliert.

### Prüfmethoden

Die Probekörper für die mechanischen Prüfungen werden bei 220°C Messtemperatur und 45°C Formtemperatur gespritzt. E-Modul (Elastizitätsmodul) [N/mm²], Streckspannung [N/mm²] und Bruchdehnung FR [%] werden im Zugversuch nach EN ISO 527 (DIN EN ISO 527-1 und 527-2) mit Zugstäben gemäß EN-ISO 3167 bei 23°C ermittelt.

Der Gelbwert YI [%] wird ermittelt als Yellowness Index YI durch Bestimmung der Farbkoordinaten X, Y, Z nach DIN 5033 bei Normlicht D 65 und 10°-Normalbeobachter nach der folgenden Gleichung YI = (131.48 X-116.46 Z)Y.

Die Transmission [%] und die Trübung (Haze) [%] werden gemäß ASTM-D 1003 ermittelt.

### Serie A

**Tabelle 1a: Zusammensetzungen [Gew.-T.] = Gew.-Teile**

| Beispiel | Komponente A²⁾ [Gew.-T.] | Komponente B³⁾ [Gew.-T.] | Komponente C⁴⁾ [Gew.-T.] | Komponente C⁵⁾ [Gew.-T.] | Komponente D⁶⁾ [Gew.-T.] |
|---|---|---|---|---|---|
| 1A, V¹⁾ | 65 | 35 | | | |
| 2A, V¹⁾ | 65 | 30 | | | 5 |
| 3A, V¹⁾ | 65 | 25 | | | 10 |
| 4A, V¹⁾ | 60 | 40 | | | |
| 5A, V¹⁾ | 60 | 30 | | | 10 |
| 6A | 70 | 25 | 5 | | |
| 7A | 65 | 30 | 5 | | |
| 8A | 70 | 25 | | 5 | |
| 9A | 65 | 30 | | 5 | |

| | | | | | |
|---|---|---|---|---|---|
| 1) Vergleichsbeispiel 2) Luran® KR2556 (BASF SE) 3) Styrolux® 3G55 (BASF SE) 4) SBM A012 (Arkema) 5) SBM A250 (Arkema) 6) PS 158K (BASF SE) | | | | | |

**Tabelle 1b: Mechanische und optische Daten von extrudierten Folien**

| | senkrecht | | | parallel | | | optische Eigenschaften | | |
|---|---|---|---|---|---|---|---|---|---|
| Beispiel | E-modul [N/m m²] | Streck spannung [N/mm ²] | Bruchdehnung [%] | E-Modul [N/m m²] | Streckspannung [N/mm² ] | Bruchdehnung [%] | Trans mission [%] | Trübung [%] | YI [%] |
| 1A, V¹⁾ | 1519 | | 1,5 | 2529 | 53,2 | 11,7 | 81,5 | 62,2 | 2,7 |
| 2A, V¹⁾ | 1492 | | 5,8 | 2681 | 56,2 | 17,4 | 81,5 | 57,7 | 2,2 |
| 3A, V¹⁾ | 1676 | | 5,8 | 2680 | 56,4 | 14 | 81,3 | 66,6 | 4,3 |
| 4A, V¹⁾ | 1102 | | 6,4 | 2002 | 44,9 | 20,3 | 82 | 53,2 | 1,3 |
| 5A, V¹⁾ | 1484 | | 4,9 | 2426 | 50,3 | 13,2 | 81,5 | 62,3 | 4,4 |
| 6A | 2023 | 43,3 | 24,2 | 2454 | 54,4 | 12,6 | 79,3 | 22,8 | 8,7 |
| 7A | 1796 | | 7 | 2132 | 46 | 25,5 | 71,6 | 52,7 | 11,2 |
| 8A | 2026 | 36,9 | 5,7 | 2638 | 59 | 12,8 | 84,4 | 14,3 | 3,5 |
| 9A | 1716 | | 21,1 | 2416 | 54,3 | 16,5 | 82,9 | 20,3 | 3,6 |

| | | | | | | | | | |
|---|---|---|---|---|---|---|---|---|---|
| 1) Vergleichsbeispiel | | | | | | | | | |

### Serie B

**Tabelle 2a: Zusammensetzungen [Gew.-T.] = Gew.-Teile**

| Beispiel | D¹⁾ [Gew.-T.] | A²⁾ [Gew. -T.] | A³⁾ [Gew. -T.] | C⁴⁾ [Gew. -T.] | C⁵⁾ [Gew. -T.] | C⁶⁾ [Gew. -T.] | E⁷⁾ [Gew. -T.] | B⁸⁾ [Gew. -T.] | B⁹⁾ [Gew. -T.] |
|---|---|---|---|---|---|---|---|---|---|
| 1BV¹⁰⁾ | 35 | 35 | | 30 | | | | | |
| 2BV¹⁰⁾ | 35 | 35 | | 25 | | | 5 | | |
| 3BV¹⁰⁾ | 35 | 35 | | 20 | | | 10 | | |
| 4B | 35 | 35 | | 20 | | | | 10 | |
| 5B | 35 | 35 | | 20 | | | | | 10 |
| 6B | 35 | 35 | | 10 | | | | | 20 |
| 7BV¹⁰⁾ | 35 | 35 | | | 20 | | 10 | | |
| 8BV¹⁰⁾ | 35 | 35 | | | | 20 | 10 | | |
| 9BV¹⁰⁾ | 35 | | 35 | 25 | | | 5 | | |

| | | | | | | | | | |
|---|---|---|---|---|---|---|---|---|---|
| 1) Komponente CB: PS 158K (BASF) 2) Komponente A: Luran® 358 N (BASF) 3) Komponente A: Luran® 378 P (BASF) 4) Componente C: SBM A123 (Arkema) 5) Komponente C: SBM A012 (Arkema) 6) Komponente C: SBM A250 (Arkema) 7) Komponente E: Kraton® G1652 (Kraton Polymers LLC) 8) Komponente B: Styroflex® 2G 66 (BASF AG) 9) Komponente B: Styrolux® BX 6401 (BASF AG) 10) Vergleichsbeispiel | | | | | | | | | |

**Tabelle 2b: Mechanische und optische Daten von extrudierten Folien (Wabenkonzept)**

| | parallel | | | senkrecht | | |
|---|---|---|---|---|---|---|
| Beispiel | E-modul [N/mm²] | Streckspannung [N/mm²] | Bruchdehnung[%] | E-Modul [N/mm²] | Streckspannung [N/mm²] | Bruchdehnung [%] |
| 1BV¹⁾ | 1231 | 25,7 | 21,8 | 1032 | 17,3 | 12,3 |
| 2BV¹⁾ | 1395 | 26 | 37,8 | 1117 | 16,2 | 16,5 |
| 3BV¹⁾ | 1460 | 26,7 | 31,3 | 1079 | 15,2 | 24,9 |
| 4B | 1625 | 30,5 | 37,3 | 1106 | 16,9 | 21,2 |
| 5B | 1767 | 34,2 | 25,7 | 1353 | 18,9 | 12,9 |
| 6B | 2257 | 42,2 | 18,6 | 1518 | 20,1 | 5,8 |
| 7BV¹⁾ | 1230 | 23,5 | 9,8 | 953 | 15,6 | 6,1 |
| 8BV¹⁾ | 2644 | | 2,4 | 2462 | | 2,5 |
| 9BV¹⁾ | 1648 | 30 | 18,2 | 1357 | 16,8 | 11,7 |

| | | | | | | |
|---|---|---|---|---|---|---|
| 1) Vergleichsbeispiel | | | | | | |

## Patentansprüche

1. Zusammensetzungen enthaltend
A mindestens ein Copolymer A aufgebaut aus
a1) mindestens einem alkylierten Styrol als Komponente A1;
a2) Acrylnitril als Komponente A2;
a3) gegebenenfalls mindestens einem weiteren Monomeren als Komponente A3;
B mindestens ein Blockcopolymer B aufgebaut aus
b1) mindestens einem eine Hartphase bildenden Block B1, aufgebaut aus mindestens einem vinylaromatischen Monomeren, und
b2) mindestens einem eine Weichphase bildenden Block B2, aufgebaut aus mindestens einem vinylaromatischen Monomeren und mindestens einem Dien;
C mindestens ein Triblockcopolymer C aufgebaut aus
c1) einem ersten Block C1, aufgebaut aus mindestens einem vinylaromatischen Monomeren,
c2) einem zweiten Block C2, aufgebaut aus mindestens einem Dien,
c3) einem dritten Block C3, aufgebaut aus mindestens einem Methylmethacrylat-Monomeren oder enthaltend mindestens 50 Gew.-% Methylmethacrylat;
D gegebenenfalls mindestens ein Styrolpolymer ausgewählt aus glasklarem Polystyrol und schlagzähem Polystyrol.

2. Zusammensetzungen nach Anspruch 1 enthaltend
A 30 bis 85 Gew.-% des Copolymers A;
B 5 bis 69,9 Gew.-% des Blockcopolymers B; und
C 0,1 bis 45 Gew.-% des Copolymers C;
D 0 bis 50 Gew.-% der Komponente D.
wobei die Gesamtsumme der Komponenten A, B, C und gegebenenfalls D 100 Gew.-% beträgt.

3. Zusammensetzung nach Anspruch 1 oder 2, **dadurch gekennzeichnet, dass** das Copolymer A aufgebaut ist aus
a1) 60 bis 90 Gew.-% mindestens eines alkylierten Styrols als Komponente A1.
a2) 10 bis 40 Gew.-% Acrylnitril als Komponente A2,
a3) 0 bis 30 Gew.-% mindestens eines weiteren Monomeren als Komponente A3,
wobei die Gesamtsumme der Komponenten A1, A2 und A3 100 Gew.-% beträgt.

4. Zusammensetzung nach einem der Ansprüche 1 bis 3, **dadurch gekennzeichnet. dass** das Blockcopolymer B eine Monomerzusammensetzung von 15 bis 65 Gew.-% Dien und 35 bis 85 Gew.-% vinylaromatischem Monomer aufweist, wobei die Gesamtsumme an Dien und vinylaromatischem Monomer 100 Gew.-% beträgt.

5. Zusammensetzung nach einem der Ansprüche 1 bis 4, **dadurch gekennzeichnet, dass** das Blockcopolymer B aus mindestens zwei eine Hartphase bildenden Blöcken B1 und mindestens einem dazwischen liegenden eine Weichphase bildenden Block B2 aufgebaut ist.

6. Zusammensetzung nach einem der Ansprüche 1 bis 5, **dadurch gekennzeichnet, dass** in dem Blockcopolymer B der relative Anteil an 1.2-Verknüpfungen der Dieneinheiten des die Weichphase bildenden Blocks B2 (Polydien), bezogen auf die Summe an 1,2- und 1,4-cis/trans-Verknüpfungen, ≤ 20% beträgt.

7. Zusammensetzung nach einem der Ansprüche 1 bis 6, **dadurch gekennzeichnet, dass** in dem Blockcopolymer B der Block B1 aus Styrol und der Block B2 aus Butadien und Styrol aufgebaut ist.

8. Zusammensetzung nach einem der Ansprüche 1 bis 7, **dadurch gekennzeichnet, dass** das Triblockcopolymer C aufgebaut ist aus
c1) 10 bis 88 Gew.-% des ersten Blocks C1,
c2) 2 bis 80 Gew.-% des zweiten Blocks C2,
c3) 10 bis 88 Gew.-% des dritten Blocks C3,
wobei die Summe der Komponenten C1, C2 und C3 100 Gew.-% beträgt.

9. Zusammensetzung nach einem der Ansprüche 1 bis 8, **dadurch gekennzeichnet, dass** das Triblockcopolymer C aus einem ersten Block C1 aus mindestens einem vinylaromatischen Monomeren ausgewählt aus Styrol und α-Methylstyrol, einem zweiten Block C2 aus mindestens einem Dien ausgewählt aus Butadien und Isopren und einem dritten Block C3, der zu mindestens 60 Gew.-% aus PMMA aufgebaut ist, aufgebaut ist.

10. Zusammensetzung nach einem der Ansprüche 1 bis 9. **dadurch gekennzeichnet. dass** die Komponente D glasklares Polystyrol ist.

11. Zusammensetzung nach einem der Ansprüche 1 bis 10, **dadurch gekennzeichnet, dass** als zusätzliche Komponente E kautschukartige Styrol-Blockcopolymere enthalten sind.

12. Verfahren zur Herstellung von Zusammensetzungen nach einem der Ansprüche 1 bis 11, **dadurch gekennzeichnet, dass** die Komponenten A, B, C, gegebenenfalls D und gegebenenfalls E und gegebenenfalls weitere Zusatzstoffe gemischt werden.

13. Verwendung von Zusammensetzungen nach einem der Ansprüche 1 bis 11 zur Herstellung von Formteilen, Folien, Fasern und Schäumen.

14. Formteile, Folien, Fasem und Schäume enthaltend eine Zusammensetzung gemäß einem der Ansprüche 1 bis 11.

15. Verwendung von Zusammensetzungen gemäß einem der Ansprüche 1 bis 11 als Verpackung für elektronische Komponenten, für Anwendungen im Apparatebau, in Haushaltswaren, in Badezimmerartikeln, als Gehäuse, als Rohre, als Profile, für medizinische Artikel bzw. Geräte und in Spielzeug.

## Claims

1. A composition comprising
A at least one copolymer A composed of
a1) at least one alkylated styrene as component A1;
a2) acrylonitrile as component A2;
a3) optionally at least one further monomer as component A3;
B at least one block copolymer B composed of
b1) at least one block B1 forming a hard phase and composed of at least one vinylaromatic monomer, and
b2) at least one block B2 forming a soft phase and composed of at least one vinylaromatic monomer and of at least one diene;
C at least one triblock copolymer C composed of
c1) a first block C1 composed of at least one vinylaromatic monomer,
c2) a second block C2, composed of at least one diene,
c3) a third block C3 composed of at least one methyl methacrylate monomer or comprising at least 50% by weight of methyl methacrylate;
D optionally at least one styrene polymer selected from glass-clear polystyrene and impact-resistant polystyrene.

2. The composition according to claim 1 comprising
A from 30 to 85% by weight of the copolymer A;
B from 5 to 69.9% by weight of the block copolymer B; and
C from 0.1 to 45% by weight of the copolymer C;
D from 0 to 50% by weight of component D,
where the entirety of components A, B, C, and, where used, D gives 100% by weight.

3. The composition according to claim 1 or 2, wherein the copolymer A is composed of
a1) from 60 to 90% by weight of at least one alkylated styrene as component A1,
a2) from 10 to 40% by weight of acrylonitrile as component A2,
a3) from 0 to 30% by weight of at least one further monomer as component A3,
where the entirety of components A1, A2, and A3 gives 100% by weight.

4. The composition according to any of claims 1 to 3, wherein the monomer constitution of the block copolymer B is from 15 to 65% by weight of diene, and from 35 to 85% by weight of vinylaromatic monomer, where the entirety of diene and vinylaromatic monomer gives 100% by weight.

5. The composition according to any of claims 1 to 4, wherein the block copolymer B is composed of at least two blocks B1 forming a hard phase and of at least one block B2 situated between these and forming a soft phase.

6. The composition according to any of claims 1 to 5, wherein, in the block copolymer B, the relative proportion of 1,2-linkages of the diene units of the block B2 (polydiene) forming the soft phase, based on the entirety of 1,2- and 1,4-cis/trans linkages, is ≤ 20%.

7. The composition according to any of claims 1 to 6, wherein, in the block copolymer B, the block B1 is composed of styrene and the block B2 is composed of butadiene and styrene.

8. The composition according to any of claims 1 to 7, wherein the triblock copolymer C is composed of
c1) from 10 to 88% by weight of the first block C1,
c2) from 2 to 80% by weight of the second block C2,
c3) from 10 to 88% by weight of the third block C3, where the entirety of components C1, C2, and C3 gives 100% by weight.

9. The composition according to any of claims 1 to 8, wherein the triblock copolymer C is composed of a first block C1 composed of at least one vinylaromatic monomer selected from styrene and a-methylstyrene, of a second block C2 composed of at least one diene selected from butadiene and isoprene, and of a third block C3 composed of at least 60% by weight of PMMA.

10. The composition according to any of claims 1 to 9, wherein component D is glass-clear polystyrene.

11. The composition according to any of claims 1 to 10, wherein rubbery styrene block copolymers are comprised as additional component E.

12. A process for the preparation of compositions according to any of claims 1 to 11, which comprises mixing components A, B, C, optionally D, and optionally E, and optionally further additives.

13. The use of compositions according to any of claims 1 to 11 for the production of moldings, of foils, of fibers, or of foams.

14. A molding, a foil, a fiber, or a foam comprising a composition according to any of claims 1 to 11.

15. The use of compositions according to any of claims 1 to 11 as packaging for electronic components, for applications in chemical engineering, in household products, in bathroom items, as housings, as tubes, as profiles, for medical items or medical devices, and in toys.

## Revendications

1. Compositions contenant:
A) au moins un copolymère A obtenu à partir de:
a1) au moins un styrène alkylé en tant que composant A1,
a2) de l'acrylonitrile, en tant que composant A2,
a3) éventuellement au moins un autre monomère en tant que composant A3;
B) au moins un copolymère B obtenu à partir de:
b1) au moins une séquence B1 formant une phase dure, obtenue à partir d'au moins un monomère vinylaromatique et
b2) au moins une séquence B2 formant une phase molle, obtenue à partir d'au moins un monomère vinylaromatique et d'au moins un diène;
C) au moins un copolymère triséquencé C obtenu à partir de:
c1) une première séquence C1, obtenue à partir d'au moins un monomère vinylaromatique,
c2) une deuxième séquence C2, obtenue à partir d'au moins un diène,
c3) une troisièmeséquence C3, obtenue à partir d'au moins un monomère de méthacrylate de méthyle ou comprenant au moins 50% en poids de méthacrylate de méthyle;
D) éventuellement au moins un polymère de styrène consistant en polystyrène cristal ou polystyrène résistant au choc.

2. Compositions selon la revendication 1, comprenant
A) de 30 à 85% en poids du copolymère A;
B) de 5 à 69,9% en poids du copolymère à séquences B et
C) 0,1 à 45% en poids du copolymère C,
D) de 0 à 50% en poids du composant D,
dans lesquelles l'ensemble des composants A, B, C et éventuellement D forme 100% en poids de ladite composition.

3. Composition selon la revendication 1 ou 2, **caractérisée en ce que** le copolymère A est obtenu à partir de:
a1) 60 à 90% en poids d'au moins un styrène alkylé en tant que composant A1,
a2) 10 à 40% en poids d'acrylonitrile en tant que composant A2,
a3) 0 à 30% en poids d'au moins un autre monomère en tant que composant A3, dans laquelle l'ensemble des composants A1, A2 et A3 forme 100% en poids de ladite composition.

4. Composition selon l'une quelconque des revendications 1 à 3, **caractérisée en ce que** le copolymère séquencé B présente une composition de monomères formée de 15 à 65% en poids de diène et de 35 à 85% en poids d'un monomère vinyl aromatique, composition dans laquelle le diène et le monomère vinyl-aromatique forment ensemble 100% en poids de ladite composition.

5. Composition selon l'une quelconque des revendications 1 à 4, **caractérisée en ce que** le copolymère séquencé B est obtenu à partir d'au moins 2 séquences B1 consistant en une phase dure et au moins, entre ces 2 séquences, une séquence B2 intermédiaire formée d'une phase molle.

6. Composition selon l'une quelconque des revendications 1 à 5, **caractérisée en ce que** dans le copolymère séquencé B, la quantité relative de liaisons 1 ,2- des motifs diéniques de la séquence B2 formant une phase molle (polydiène), exprimée par rapport à la somme des liaisons 1,2 et 1,4-cis/trans, est ≤ 20%

7. Composition selon l'une quelconque des revendications 1 à 6, **caractérisée en ce que** le copolymère B de la séquence B1 est formé de styrène et **en ce que** la séquence B2 est obtenue à partir de butadiène et de styrène.

8. Composition selon l'une quelconque des revendications 1 à 7, **caractérisée en ce que** le copolymère triséquencé C est obtenu à partir de:
c1) 10 à 88% en poids de première séquence C1,
c2) de 2 à 80% en poids de deuxième séquence C2,
c3) de 10 à 88% en poids de troisième séquence C3,
composition dans laquelle l'ensemble des composants C1, C2 et C3 forme 100% en poids de ladite composition.

9. Composition selon l'une quelconque des revendications 1 à 8, **caractérisée en ce que** le copolymère ttriséquencé C est obtenu à partir d'une première séquence C1 formée d'au moins un monomère vinylaromatique consistant en styrène ou α-méthyl-styrène, d'une seconde séquence C2 formée d'au moins un diène consistant en butadiène et 1-isoprène et d'un troisième séquence C3 forme d'au moins 60% en poids de PMMA.

10. Composition selon l'une quelconque des revendications 1 à 9, **caractérisée en ce que** le composant D est un polystyrène transparent comme le verre.

11. Composition selon l'une quelconque des revendications 1 à 10, **caractérisée en ce qu'**elle contient, en tant que constituants supplémentaires E, des copolymères séquencés formés de styrène caoutchouteux.

12. Procédé pour la préparation de compositions selon l'une quelconque des revendications 1 à 11, caractérisé en ce l'on mélange les composants A, B, C, et éventuellement D et éventuellement E et éventuellement d'autres additifs.

13. Utilisation des compositions selon l'une quelconque des revendications 1 à 11, pour la production de pièces moulées, de films, de fibres et de mousses.

14. Pièces moulées, films, fibres et mousses qui contiennent une composition selon l'une quelconque des revendications 1 à 11.

15. Utilisation des compositions selon l'une quelconque des revendications 1 à 11 comme emballages pour composants électroniques, dans des applications dans la construction mécanique, les produits ménagers, les produits pour le bain, le logement et pour des articles tels les tubes, les profilés, des articles médicaux ou appareillages et jouets.
